**Europäisches Patentamt**

**European Patent Office**

**Office européen des brevets**

(11) Veröffentlichungsnummer: **0 358 782**
**A1**

# EUROPÄISCHE PATENTANMELDUNG

(21) Anmeldenummer: **88114786.2**

(22) Anmeldetag: **15.09.88**

(43) Veröffentlichungstag der Anmeldung:
**21.03.90 Patentblatt 90/12**

(84) Benannte Vertragsstaaten:
**AT BE CH DE ES FR GB IT LI NL SE**

(51) Int. Cl.⁵: **F03D 5/02**

(71) Anmelder: **Klute, Ferdinand**
**Fixberg 6**
**D-4790 Paderborn(DE)**

(72) Erfinder: **Klute, Ferdinand**
**Fixberg 6**
**D-4790 Paderborn(DE)**

(74) Vertreter: **Hoefer, Theodor, Dipl.-Ing.**
**Kreuzstrasse 32**
**D-4800 Bielefeld 1(DE)**

(54) **Windkraftanlage.**

(57) Bei einer Windkraftanlage mit von Luftströmen bewegten, mit einem Generator (73) gekuppelten Windflächen (68), die hintereinander gestaffelt in Längsrahmen (62) geführt und an seitlichen Zugvorrichtungen (65) angelenkt sowie über endlose seitliche Umlaufschienen (94) gestützt sind, wobei die Anlage auf einer drehbaren Stützplatte (53) steht, ist eine derartige Anordnung und Ausbildung vorgesehen, bei der gleichzeitig die Windflächen (68) im oberen Trum der Zugvorrichtung (65) etwa senkrecht stehen, im unteren Trum waagerecht gelagert sind and einige Windflächen (68) an den beidseitigen Enden des Längsrahmens (62) in Umkehrposition liegen, und bei der im oberen Bereich jeder Windfläche (68) zusätzliche waagerechte Führungszapfen (71) angeordnet sind, deren nach außen vorstehende Enden in eine äußere Führungsleiste (78) einfassen, die mit größerem Durchmesser in gewissem Abstand von der inneren Führungsnut (64) am Längsrahmen (62) befestigt ist.

Fig.4
Fig.4a
Fig.4b

EP 0 358 782 A1

# Windkraftanlage

Die Erfindung bezieht sich auf eine Windkraftanlage mit von Luftströmungen bewegten, mit einem Generator gekuppelten, sich vom Winde bewegenden Druckflächen, die an endlosen waagerechten Zugeinrichtungen angelenkt sind.

Soweit es bekannt ist, als Windkraftanlagen Windturbinen mit mehreren Rotorblättern vorzugsehen, so besteht deren Nachteil darin, daß die der Luftströmung ausgesetzten Rotorblätter aus Stabilitätsgründen verhältnismäßig kleine, schräggestellte Flächen besitzen und damit nur ein geringer Teil der vorhandenen Luft strömung (Menge) ausgenutzt werden kann, wobei außerdem die Luft nachteilig nicht senkrecht, sondern unter einem spitzen bzw. stumpfen Winkel auf die Rotorblätter auftrifft.

Da auch bei einer in Betrieb befindlichen Rotoranlage eine fortwährende Richtungsänderung zwischen der Luftströmungsrichtung und der Stellung der Rotorblätter auftritt, so ist der Wirkungsgrad im Verhältnis zur Menge der vorbeiströmenden Luft verhältnismäßig gering.

Aufgabe der Erfindung ist es, eine rotorfreie Windkraftanlage mit großen Druckflächen zu schaffen, bei der unter Zwangsführung die Windflächen als Druckflächen wechselweise bei ihrer Bewegung einerseits mit dem Wind als auch andererseits gegen den Wind ihre Lage verändern, um der Windströmung optimal ausgenutzte Windflächen zu bieten.

Gemäß der Erfindung wird diese Aufgabe bei einer Windkraftanlage der angegebenen Gattung dadurch gelöst, daß gleichzeitig im oberen Trum der Zugvorrichtung die Windflächen etwa senkrecht stehen, im unteren Trum der Zugvorrichtung waagerecht gelagert sind und einige Windflächen an den beidseitigen Enden eines tragenden Längsrahmens in Umkehrposition liegen.

Bei dieser in Windrichtung aufgestellten Windkraftanlage bewegen sich die senkrecht stehenden Windflächen unter Winddruck in einer Richtung bis an eine Umlenkrolle. Beim Umlauf an dem unteren Trum der Zugvorrichtungen sind die Windflächen zur Verringerung ihres Windwiderstandes bei der Vorwärtsbewegung bis zur vorderen Umlenkrolle waagerecht gelagert.

Im Bereich der vorderen Umlenkrolle erheben sich die Windflächen dann wieder in eine senkrechte Stellung, so daß kontinuierlich der Winddruck nacheinander die Windflächen beaufschlagt und damit die Zugvorrichtungen bewegt, mit denen ein Generator gekuppelt ist.

Bei einer bevorzugten Ausführungsform sind die beidseitig parallellaufenden Zugvorrichtungen um vorderseitige Umlenkrollen und um rückseitige Umlenkrollen herumgeführt, an deren verbindender Kraftwelle ein Generator angekuppelt ist.

Bei weiterer bevorzugter Ausführungsform sind die Windflächen jeweils mit einem umfassenden Außenrahmen augestattet, in dem eine Windplane aus Gewebe, Kunststoff-Folie o.dgl. aufgespannt ist.

Jede Windfläche hat vorzugsweise eine mittlere waagerechte Haltequerstrebe, deren Enden in seitliche, dem Lauf der endlosen Zugvorrichtung entsprechend geschlossene Führungsnuten einfassen, die an einem Längsrahmen befestigt sein können.

Vorzugsweise ist im oberen Bereich jeder Windfläche eine zusätzliche waagerechte Führungsstrebe angeordnet, deren nach außen vorstehende Enden in eine äußere Führungsleiste einfassen, die mit größerem Durchmesser in gewissem Abstand von der inneren Führungsnut an einem Längsrahmen befestigt sein kann.

Um eine Windfläche aus der oberen senkrechten Lage in eine untere waagerechte Lage umzukippen, verringert sich der Abstand der äußeren Führungsleiste im äußeren Bereich der Umlenkrollen und nähert sich dem unteren Bereich der Führungsnut.

Mit einer derartigen großflächigen Windkraftanlage ist es möglich, die Luftströme großflächig zu erfassen, so daß deren Energie dann über den Generator in elektrische Energie umgesetzt werden kann.

Mit der Erfindung sollen nicht nur die Einzelmerkmale, sondern auch deren Kombination geschützt sein.

Bei einer weiteren bevorzugten Ausführungsform sind jeweils eine größere untere Umlenkrolle und dazu versetzt eine kleinere obere Umlenkrolle vorgesehen, durch welche der Lagewechsel der sich bewegenden Windflächen verbessert wird.

Bei den rückwärtigen Umlenkrollen werden die Windflächen in ihrem Verlauf durch zwei Drehungen um 267° umgekippt oder so gedreht, daß sie beim unteren Trum der Zugvorrichtung mit einer einseitigen Neigung von ca. 3° fast waagerecht liegen und somit bei der Vorwärtsbewegung zum vorderseitigen Einsatzpunkt den Luftströmungen nur geringen Widerstand entgegensetzen.

Im Bereich der vorderen Umlenkrollen erheben sich die Windflächen dann wieder in die senkrechte Stellung, bedingt durch die beim Umlauf unterschiedlichen Abstände zwischen den Umlaufschienen und den Führungsnuten.

Nach Ablauf der waagerechten, im unteren Trum der Anlage gelegenen Laufstrecke, bei den vorderseitigen größeren und in gewissem Abstand darüberliegenden kleineren Umlenkrollen, dreht sich jede Windfläche um weitere 93°. Damit hat sie sich bei einem Umlauf um 360° gedreht. Jetzt befinden sich die Windflächen in senkrechter Stellung, so daß kontinuierlich der Winddruck nacheinander diese in Längsrichtung angeordneten und sich auf gleicher Ebene hinter- und nebeneinander bewegenden, parallellaufenden Windflächen beaufschlagt und damit die Zugvorrichtungen bewegt, die über die rückseitigen Umlenkrollen eine gemeinsame Kraftwelle treiben, an der außenseitig an einem Ende ein Ausgleichs-Schwungrad und am anderen außerhalb des Längsträgers ein Generator gekuppelt ist.

Eine weitere bevorzugte Ausführungsform zeigt eine Windkraftanlage mit mehreren Bahnen, bei der alle festen und beweglichen Teile auf allen Bahnen gleich sind.

Der Abstand zwischen der inneren Umlaufschiene und der äußeren Führungsnute im oberen Trum der Windkraftanlage einschließlich den vorder- und rückseitigen Absenkungen ist gleich dem Abstand der Zug- bzw. Führungszapfen am Außenrahmen der Windfläche.

Dieser Abstand ist bei den unteren Tangenten der vorder- bzw. rückwärtigen größeren Umlenkrollen völlig aufgehoben. Die Führungsnut liegt dort direkt unterhalb der inneren Umlaufschiene im unteren Trum der Windkraftanlage. Auf den äußeren Enden der Führungszapfen können Hartgummirollen gelagert sein. Im betrieblichen Zustand halten die beidseitigen Führungszapfen in Verbindung mit den entsprechend angeordneten Führungsleisten die Windfläche immer in der notwendigen gewünschten Position.

Eine Querleitblende kann auf jeder der Bahnen der Gesamtanlage zwischen den rückwärtigen Umlenkrollen angeordnet sein. Sie dient einerseits als Windfahne und begünstigt zum anderen das Umkippen der Windfläche am rückwärtigen Ende der Bahn, indem sie durch die Ablenkung der Luftströmung auf die untere rückwärtige Hälfte der Windfläche diese nach oben drückt, wobei deren beide Hälften kurz nacheinander den für die Drehung günstigen Windschatten der Querleitblende durchlaufen.

Damit die Luftströmung auch die Windflächen verbessert erreichen, die sich jeweils senkrecht im Windschatten der vorderen befinden, können die Windflächen in mehrere senkrecht stehende Segmentflächen unterteilt und in Dreiergruppen nach rückwärts gestaffelt an einem Segmentrahmen befestigt sein. Durch die Rückwärtsstaffelung der zweiten und dritten Segmentfläche innerhalb einer Gruppe werden Luftkanäle geschaffen, in denen sich die Geschwindigkeit der Strömungsmengen wesentlich erhöht und dadurch in diesem Bereich die Schubleistung auf die senkrecht stehenden Segmentflächen begünstigt.

Weitere Merkmale der Erfindung ergeben sich aus den Unteransprüchen. Mit der Erfindung sollen nicht nur die Einzelmerkmale, sondern auch die Kombination geschützt sein.

Auf der Zeichnung sind Ausführungsbeispiele der Erfindung dargestellt. Es zeigen:

Fig.1 eine Seitenansicht einer Windkraftanlage mit an Zugvorrichtungen angelenkten Windflächen an einem in die Windrichtung einschwenkbaren Mast;

Fig.1a eine Teilseitenansicht in vergrößerter Darstellung eines Endbereiches der in einem Längsrahmen angeordneten Führungen der Zugvorrichtung mit Umlenkrolle und einer Querleitblende;

Fig.2 eine Vorderansicht derselben Windkraftanlage;

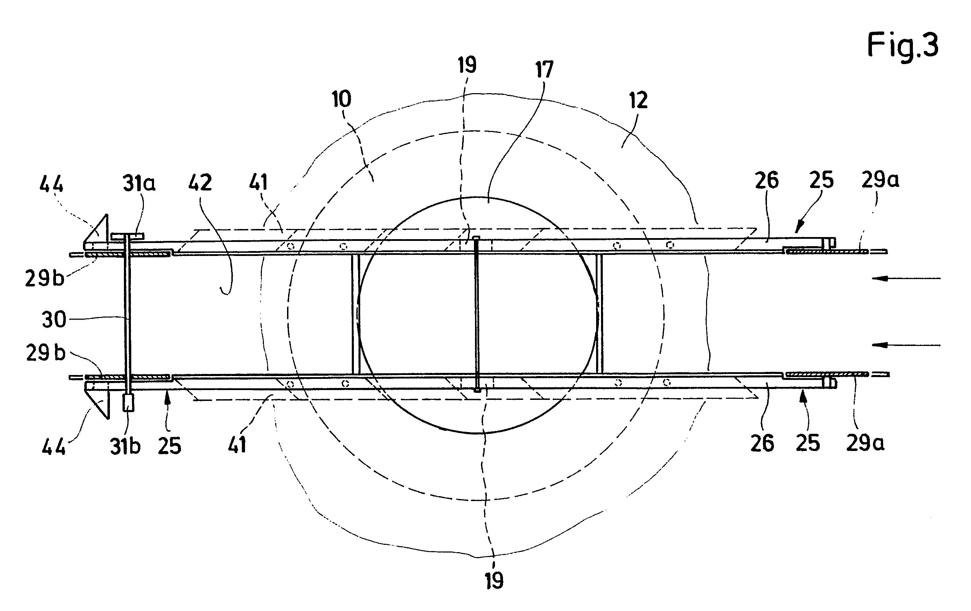

Fig.3 eine schematische Draufsicht auf den Längsrahmen derselben Windkraftanlage auf einem Sockel;

Fig.4 eine schematische Vorderansicht einer abgeänderten Windkraftanlage mit mehreren Masten auf einer Stützplatte mit mehreren Windplanenflächen in einem Längsrahmen mit Umlenkrollen;

Fig.4a einen senkrechten Teilschnitt des Seitenbereiches eines Sockels mit übergreifender Plattform;

Fig.4b eine Seitenansicht einer Vorhaltefeder ;

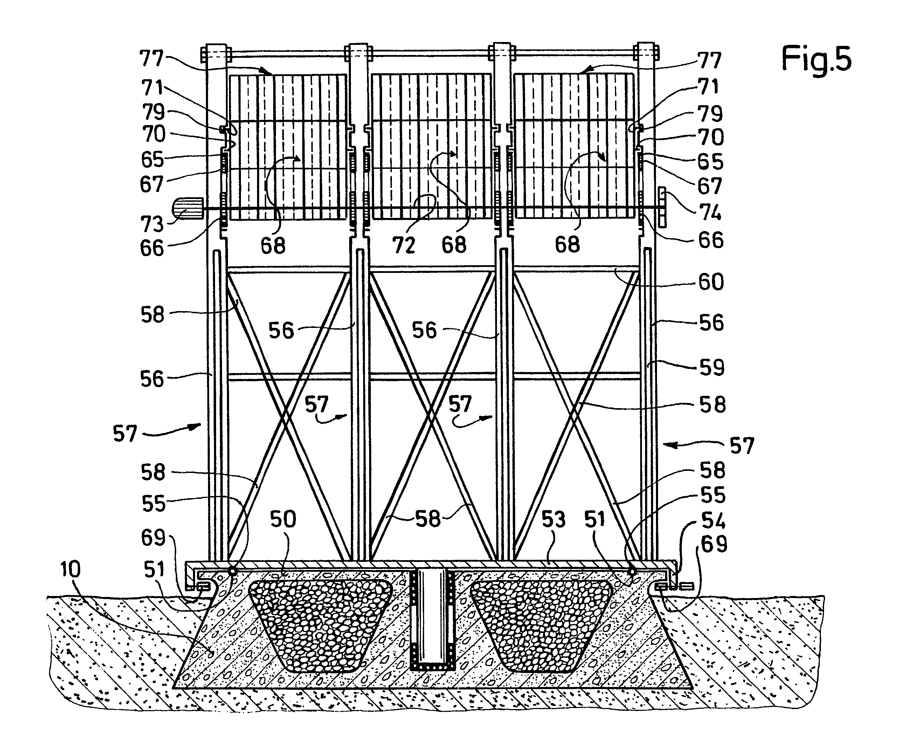

Fig.5 eine Vorderansicht derselben abgeänderten Windkraftanlage gemäß Fig.4 mit drei Rahmen und Windplanenflächen mit Umkehrrollen mit einer Kraftwelle und seitlichem Ausgleichsschwungrad mit Generator,

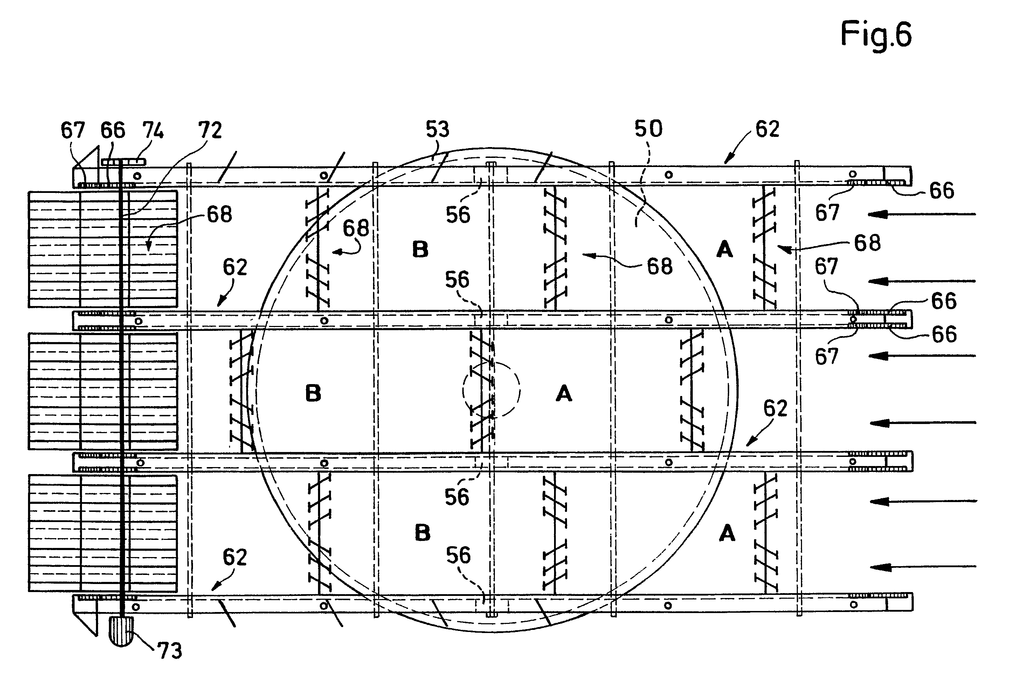

Fig.6 eine Draufsicht auf eine Ausführung gemäß Fig.5 mit schräggestellten senkrechten Windplanenflächen in drei Luftkanälen zwischen den Längsrahmen;

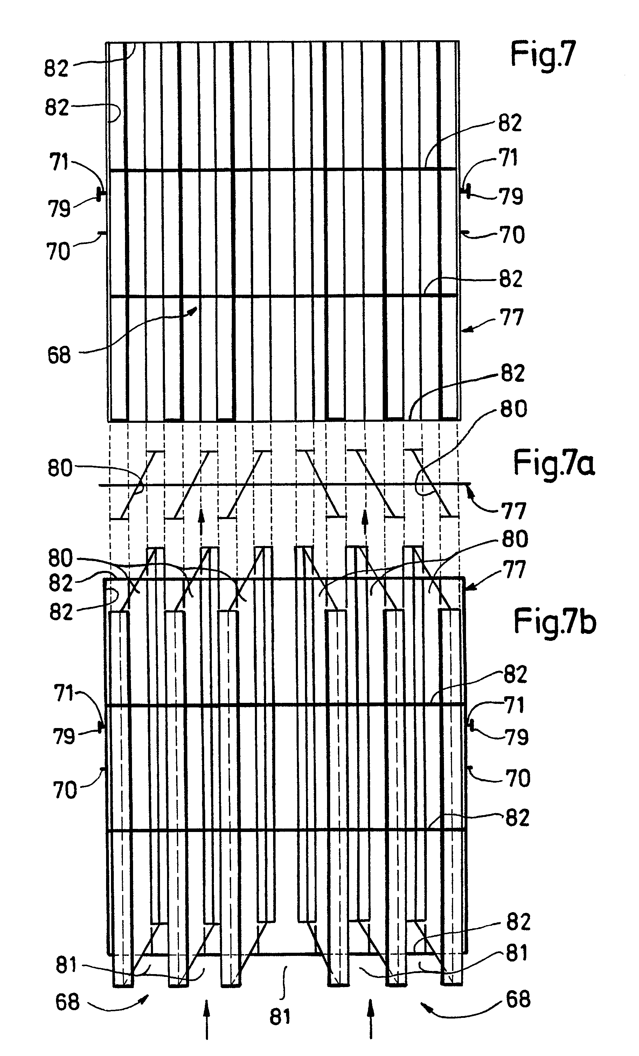

Fig.7 7a 7b schematische perspektivische Ansichten einer Windplanenfläche mit gestaffelten Segmentflächen und Luftkanälen gemäß Fig.5, 6;

Fig.8 eine perspektivische Ansicht einer in einen Tunnel eingebauten Windkraftanlage gemäß Fig.4 in verkleinerter Darstellung;

Fig.8a eine schematische Draufsicht auf einen Luftkanal mit schräggestellten Windplanenflächen;

Fig.9 9a 9b schemtaische Darstellungen der in Segmente aufgeteilten Windplanenflächen in perspektivischen Ansichten und in Draufsicht;

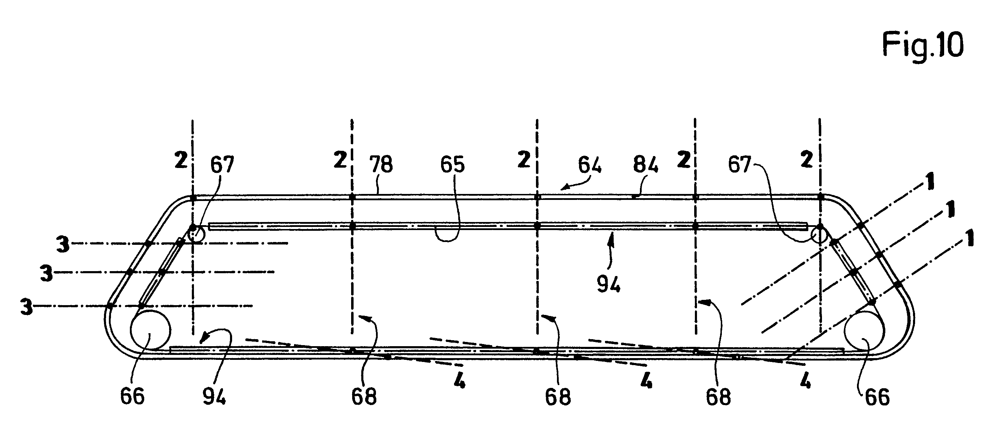

Fig.10 eine schematische Darstellung in abgeänderter Formgebung mit Winkelstellung der Windplanenflächen.

Mit 10 ist ein Betonrahmensockel bezeichnet, der vorzugsweise mit einem schweren Füllmaterial 11 zur Stabilität gefüllt und im gewachsenen Boden 12 versenkt ist.

In dem Zentrum dieses Betonrahmensockels 10 ist eine senkrechte Lagerbuchse 13 eingesetzt, in der ein senkrechter Stützzapfen 14 mittels Kugellagers 15 drehbar gelagert ist.

Dieser Stützzapfen 14 trägt eine waagerechte Stützplatte 16, auf der eine waagerechte Plattform 17 ruht, die an ihrem Umfang untenseitig mittels Lagerrollen 18 drehbar auf der Oberfläche des Betonrahmensockels 10 gelagert ist.

Auf dieser Plattform 17 stehen sich zwei senkrechte Masten 19 gegenüber, die einen Rahmen 20 bilden, der mittels Diagonalstreben 21 und/oder senkrechten Stützstreben 22 abgestützt ist.

Die beiden senkrechten Masten 19 sind zusätzlich mittels Querträgern 23 im oberen Ende und im Mittelbereich zu dem senkrechten Rahmen 20 verbunden.

An der Spitze dieses Rahmens 20 mit den beiden senkrechten Masten 19 ist ein gespreizte Aufhängeseil 24 befestigt, an dem ein Längsrahmen 25 aufgehängt ist, der zusätzlich zwischen den Masten 19 befestigt ist.

Dieses gespreizte Aufhängeseil 24 ist jeweils an jedem äußeren Ende eines oberen Längsträgers 26 des Längs rahmens 25 angeschlagen, so daß der freitragende, nur in seinem Mittelbereich unterstützte Längsrahmen 25 seilbrückenartig aufgehängt ist.

Dieser Längsrahmen 25 hat in seinen beiden seitlichen Längsträgern 26 in seitlichen Führungsnuten 27 jeweils eine endlos umlaufende Zugvorrichtung, wie Kette 28, Seil, Riemen o.dgl., die jeweils über eine vordere und rückseitig Umlenkrolle 29a, 29b umläuft, die paarweise angeordnet sind. Im Zentrum des hinteren Umlenkrollenpaares 29b ist eine durchgehende verbindende Kraftwelle 30 gelagert, die auf ihrer einen Seite mit einem außenseitigen Generator 31b mechanisch gekuppelt und die auf ihrer anderen Seite mit einem Schwungrad 31a außerhalb der Längsträger 26 ausgestattet ist. Die paarweise angeordneten vorderen Umlenkrollen 29a sind mittels einer Achse 29c in senkrecht verlaufenden Streben des Längsrahmen 25 angeordnet und miteinander synchron gekuppelt. Dieses seitlich am Längsrahmen 25 auf der Kraftwelle 30 der Umlenkrolle 29b befestigte Schwungrad 31a erfüllt die Aufgabe, auftretende Durckunterschiede und damit geringfügig wechselnde Bewegungsgeschwindigkeiten der im folgenden beschriebenen Windflächen 32 auszugleichen.

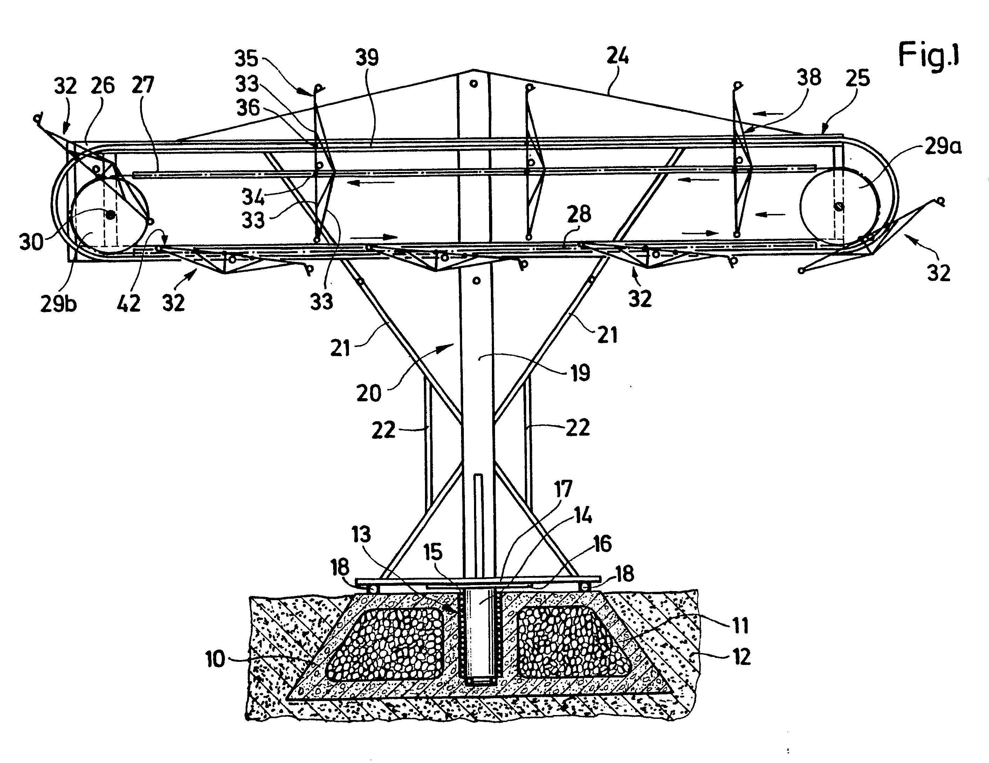

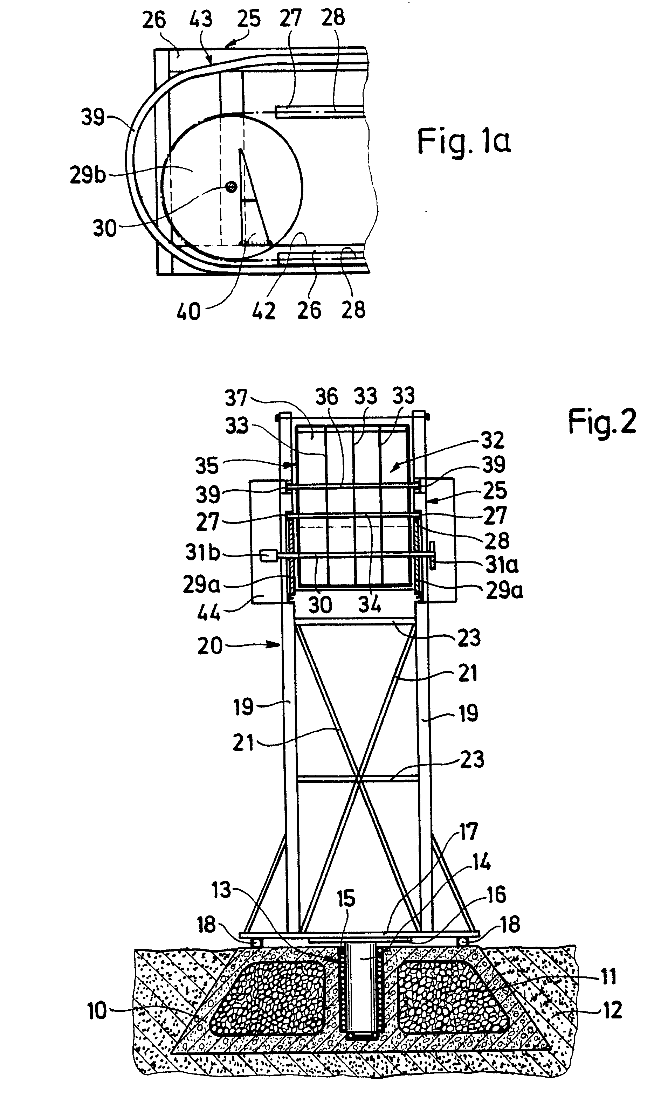

An den Zugvorrichtung, wie Ketten 28 o.dgl. sind senkrecht dazu flexible Windflächen 32 mit Windplanen (Fig.1, 2) aus Geweben o.dgl. angelenkt, die mittels senkrechter und waagerechter Stützstreben 33 jeweils gespannt sind, die über die Windfläche 32 verteilt sind, die von einem Außenrahmen 35 gehalten ist.

Zur Verstärkung jeder Gewebeplane 37 kann zusätzlich auf der Strömungsdruckseite eine aus Seilen bestehende Spannvorrichtung 38 befestigt sein, die in Verbindung mit den senkrechten und waagerechten Stützstreben 33 sowie dem Außenrahmen 35 jeder Windfläche 32 während der Windbeaufschlagung eine gewisse elastische Stabilität verleiht.

Jede Windfläche 32 ist zur Strömungsseite hin mit einem rückseitigen großmaschigen leichten Metallgitternetz und einer davorliegenden Gewebeplane 37 o.dgl. ausgestattet. Alle Werkstoffe sind witterungsbeständig.

Jede Windfläche 32, die durch diese Stützstreben 33 und vordere Spannvorrichtung 38 in etwa einen teilweise starren und teilweise flexiblen Körper bildet, ist in ihrem Mittelteil mittels einer waagerechten Haltequerstrebe 34 an den endlos umlaufenden Ketten 28 derart angelenkt, daß im oberen Trum dieser endlos umlaufenden Ketten 28 jede dieser Windflächen etwa senkrecht steht, während diese Windflächen 32 im Bereich der rückseitigen Umlenkrollen 29b abkippen und am unteren Trumm der endlosen Ketten 28 etwa waagerecht liegen. Im Bereich der vorderen Umlenkrollen 29a richtet sich jede Windfläche 32 wieder in die senkrechte Lage auf.

Der obere Teil jeder Windfläche 32 ist zur ankommenden Luftströmung hin im oberen Bereich abgewinkelt um 45° und kann vorzugsweise um insgesamt 1/5 länger sein als der untere Teil (von dem oberen Kettentrum 28 aus gerechnet).

Durch die sogenannte Toplastigkeit und durch den Strömungsdruck auf den abgewinkelten oberen Flächen bereich wird das Umkehrmoment der Windfläche 32 bei der rückseitigen Absenkung und Umkehr gesichert, außerdem noch durch die verstärkte Absenkung begünstigt.

Jede Windfläche 32 ist u.a. mit einer unteren waagerechten Haltequerstrebe 34 ausgestattet, deren Enden über die senkrechten Außenrahmen 35 bis in die endlosen beiderseitigen Zugvorrichtungen 28 hineinragen und darin einfassen. Diese Haltequerstrebe 34 verbindet den Außenrahmen 35 der Windfläche 32 mit allen senkrechten Stützstreben 33 auf gleicher Ebene. Eine weitere waagerechte Führungsstrebe 36 liegt oberhalb der Haltequerstrebe 34. Sie verbindet auch alle senkrechten Stützstreben 33 in der Ebene einer äußeren zusätzlichen Führungsleiste 39 und ragt beidseitig in deren nach innen offene Nut hinein.

Die oberhalb des oberen Trums der Zugvorrichtung 28 bzw. der Führungsnut 27 mit einem größeren Abstand parallel dazu verlaufende Führungsleiste 39, in der jeweils die vorzugsweise mit Haftgummi bestückten Enden der oberen waagerechten Führungsstrebe 36 gleitend einfassen, verringert im oberen Bereich der Umlenkrolle 29b ihren Abstand zu der anderen darunterliegenden Führungsnut 27 in gewisser Weise, so daß die Windfläche 32 aus ihrer senkrechten Lage sich neigt, um mit ihrem oberen Teil geneigt um diese herumzulaufen. Dabei bewegt sich das Oberteil der Windfläche 32 schneller als deren Unterteil bis zur waagerechten Lage, da die Luftströmung das längere, abgewinkelte Oberteil mehr erfaßt als das Unterteil der Windfläche 32 und bedingt durch das Auftreffen auf die Querleitblende 40 auch noch den rückseitigen unteren Bereich der Windflächen hochdrückt. Beide Luftströmungen ergänzen sich somit und begünstigen die Umkehrung von der Senkrechten in die Waagerechte.

Die senkrechte Windfläche 32 bewegt sich bei der folgenden Umkehrung um 270° damit außen um die Kraftwelle 30 herum und berührt letztere nicht.

Alle acht Windflächen 32 durchlaufen die beschriebenen Abläufe kontinuierlich, wobei das Schwungrad 31a die evtl. auch auftretenden Geschwindigkeitsunterschiede ausgleicht, die durch das jeweils gleichzeitige Aufrichten und Absenken zweier Windflächen 32 entstehen.

Es kann bevorzugt sein, die Gewebeplanen 37 jeweils als Rollo auszubilden, das je nach Windstärke o.dgl. durch Motoren und einem auf gleicher Frequenz für alle Motoren eingestellten Sensor o.dgl. gesteuert, eingerollt oder ausgerollt sein können Sie bilden eine Sicherung gegen die Unbilden der Witterung im Winter sowie gegen starke Windböen und Orkane, wenn sie aufgerollt sind und damit keine Angriffsfläche bilden.

Da die Führungsnuten 27 für die waagerechte Haltequerstrebe 34 zu den Windflächen 32 hin offen sind, können in diese auch in Höhe von 35-40 m vom Boden aus Fremdkörper eindringen, die durch die Luftströmungen aufgewirbelt wurden. Daher ist es bevorzugt, vor den Umlenkrollen 29a, 29b sogenannte Schaberbürsten gleiten zu lassen, die beweglich in den Führungsnuten 27 folgen und mit einem Stützarm an den Enden der waagerechten Haltequerstrebe 34 befestigt sind.

Fig.1 zeigt eine untenseitige waagerechte ebene Bodenfläche 42, die den gesamten Raum unmittelbar unterhalb der Windflächen- Unterkanten zwischen den parallellaufenden unteren Längsträgern 26 vollflächig abdeckt. Die zwischen den Längsrahmen sich bewegende Luftströmung kann dadurch nicht nach unten entweichen und verhindert damit eine nachteilige Wirbelbildung im Bereich der Windflächen 32. Die Bodenfläche 42 ist beidseitig mit den Längsträgern 26 verbunden und trägt somit zur Verstärkung des Längsrahmens 25 bei.

Weiterhin hat die Bodenfläche 42 den Zweck, vor dem unteren Teil der Windflächen 32 einen vorteilhaften Luftstau aufzubauen, so daß neben einem dynamischen Druck auch noch ein Staudruck wirksam wird. Bei kleineren Windflächen 32 können noch die beiden senkrechten Seiten des Längsrahmens 25 außerhalb der Längsträger 26 in ihrer ganzen Länge abgedeckt werden und ebenfalls auch die Öffnung zwischen den Längsträgern 26 nach oben, damit ein Tunnelsog entsteht.

Darüber hinaus sind beidseitig vorwiegend entlang der rückseitigen Hälfte des Längsrahmens 25 schrägstehende Leitflächen 41 angeordnet, welche die Luftströmungen auf die Windflächen 32 leiten und auch gleichzeitig als Windfahnen die rechte Hälfte der Anlage der ankommenden Luftströmung entgegenhalten.

Im folgenden soll die Funktion einer Windkraftanlage beschrieben werden, die in beiliegenden Zeichnungen dargestellt ist.

Beispielsweise hat die als Ausführungsbeispiel dargestellte Windkraftanlage insgesamt acht Windflächen 32. In der gezeichneten Betriebsphase werden die drei Windflächen 32, die sich in senkrechter Position befinden, von den Luftströmungen auf einer Ebene geradlinig in eine Richtung (nach rückwärts) verschoben und drücken die oberen beidseitigen Zugvorrichtungen, wie Ketten 28, nach rückwärts, so daß dann über die beiden Umlenkräder 29b und deren durchgehende Kraftwelle 30 die Drehbewegung an den Generator 31b weitergeleitet wird.

Aufgrund der unterschiedlichen senkrechten sowie waagerechten Abstände zwischen den umlaufenden Führungsnuten 27 und Führungsleisten 39 und deren angrenzenden Ketten 28 o.dgl. werden die jeweiligen gewünschten Positionen der Windflächen 32 erreicht.

Weil die obere Hälfte der rückseitigen Windfläche 32 von dem oberen Trum der Ketten 28 aus gesehen länger und somit schwerer ist, als deren untere Hälfte, weil außerdem die Luftströmung auf die 45° abgewinkelte Windfläche 32 drückt und wegen der verstärkten Absenkung 43, neigt sich der toplastige Spitzenbereich dieser Windfläche 32 bis zur unteren waagerechten Rückweg-Position um 270°, weil die wechselnden Abstände der inneren Führungsnuten 27 sowie die äußeren Führungsleisten 39 die betriebsbedingt gewünschten Positionen der Windflächen 32 absichern.

In den beiseitigen Führungsnuten 27 für die waagerechte Haltequerstrebe 34 verläuft die Kette 28. Weiterhin bewegen sich die drei auf dem Rückweg befindlichen Windflächen 32 am unteren Trum der Kette 28 in waagerechter Position, also mit geringem Strömungswiderstand, zum vorderen Einsatzbereich zurück.

Die vordere Windfläche 32 hebt sich dann gemäß Fig.1 aus der Waagerechten in die senkrechte Position, so daß wieder eine volle Windfläche 32 für die Luftströmung zur Verfügung steht.

Um die Luftströmung zusätzlich im Bereich der rückseitigen Umkehrrolle 29b zu leiten, ist unterhalb ihres vorderseitigen Bereiches eine vorzugsweise geneigt befestigte Querleitblende 40 vorgesehen.

Bei der Umkehrung einer rückseitigen Windfläche 32 stößt die Luftströmung von vorn vor die Schräge der Querleitblende 40. Wenn sie die Windfläche 32 abhebt, wird diese somit nach oben unter den unteren rückwärtigen Teil der Windfläche 32 gedrückt, hebt diese an und begünstigt dadurch die Umkehrung der Windfläche 32, während bei weiterer progressiver Drehung der nunmehr obere verlängerte Teil der Windfläche 32 einmal von der Luftströmung nach unten gedrückt wird und diese im weiteren Verlauf der Drehung in den Windschatten der Querleitblende 40 absinkt, die dadurch ein zweites Mal die Umkehrung begünstigt. Die Querleitblende 40 kann auch durch ein Rollo mit ferngesteuertem Motor ausgerüstet sein, welches bei entsprechender Witterung eingezogen bzw. geöffnet werden kann.

Die Querleitblende 40 dient aber auch als Windfahne, wenn die nächste ankommende Windfläche 32 noch einen größeren Abstand hat.

Die beidseitigen Windfahnen 44 sind am hinteren linken Ende der Anlage außenseitig senkrecht zwischen dem oberen und unteren waagerechten Längsrahmen 25 angeordnet.

Bei dieser Windkraftanlage treffen die Luftströmungen voll auf die Windflächen 32 und werden entsprechend genutzt.

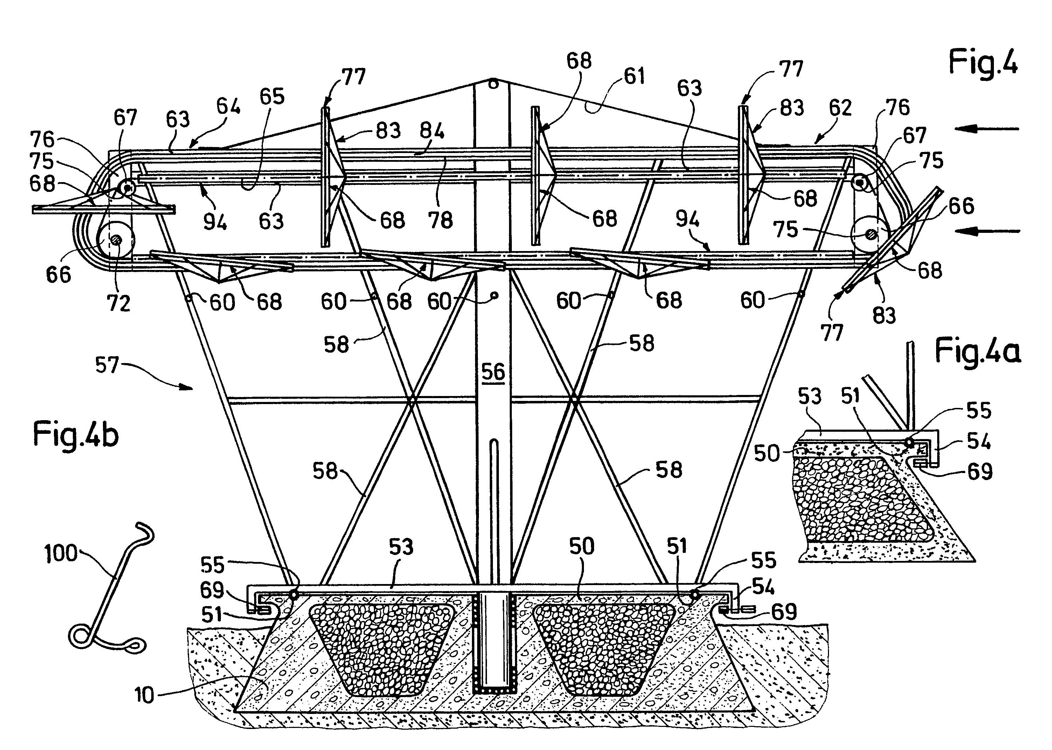

Die Oberfläche des Betonrahmensockels (10) bildet (vgl.Fig.4) eine kreisrunde Richtplatte (50), die am äußeren Rand eine kreisrunde Halbhohlbahn (51) aufweist, in der Kugeln lagern. Auf dieser Richtplatte (50) bzw. deren Kugeln lagert die Stützplatte (53) mit ihren nach unten gerichteten Stützzapfen (54).

Auch die Stützplatte (53) hat eine kreisrunde Hohlbahn (55), die mit der Hohlbahn (51) der Richtplatte (50) kongruent verläuft.

Zur Seite der ankommenden Luftströmung hin hat die Stützplatte (53) in ihrer abgewinkelten Seitenwand eine Rolle (69), die zusätzlich mit einem steuerbaren Motor (nicht dargestellt) ausgestattet ist, der die Gesamtanlage bei aufkommenden starken Winden oder Orkanen um 90° seitwärts dreht.

Auf dieser Stützplatte (53) stehen sich drei oder vier Masten (56) gegenüber, die einen senkrechten Rahmen (57) bilden, der mittels Diagonalstreben (58) und/oder senkrechten Stützstreben (59) abgestützt ist.

Die senkrechten Masten (56) sind zusätzlich mittels Querträgern (60) im oberen Ende und im Mittelbereich mit dem senkrechten Rahmen (57) verbunden.

An der Spitze des Rahmens (57) sind mehrere gespreizte Aufhängeseile (61) angeordnet, an denen die Längsrahmen (62) angehängt sind, die zusätzlich noch zwischen den Masten (56) befestigt sind.

Jedes gespreizte Aufhängeseil (61) ist an jedem äußeren Ende eines oberen Längsträgers (63) des Längsrahmens (62) angeschlagen, so daß der freitragende äußere Teil des Längsrahmens (62) auch von oben gehalten ist.

Die beiden äußeren Längsrahmen (62) von je einer Bahn haben in ihren Längsträgern (63) im seitlichen, zu Windplanen gerichteten Umlaufschienen (94) jeweils eine endlos umlaufende Zugvorrichtung, wie Kette (65), Seil o.dgl., die über eine vordere und eine rückseitige größere Umlenkrolle (66) und in gewissem Abstand dazu zwei darüberliegende kleinere Umlenkrollen (67) umläuft und die paarweise angeordnet sind.

Die Längsrahmen (62) sind an äußeren Masten (56) innen befestigt und an mittleren Masten (56) beidseitig, wobei die in ihnen liegenden inneren Umlaufschienen (64, 94) sowie außen liegende Führungsnuten zur Windplanenfläche (68) hin offen sind, und vermittels der Zugvorrichtung (65) Zugzapfen (70) und Führungszapfen (71) aufnehmen.

Die rückseitigen größeren Umlenkrollen (66) lagern in ihrem Zentrum auf einer mit ihnen fest verbundenen gemeinsamen Kraftwelle (72), auf der außerhalb der beiden äußeren Längsträger (63) je an einem Ende ein Generator (73) und ein Ausgleichsschwungrad (74) angeordnet sind.

Die paarweise zwischen den Längsrahmen (62) angeordneten, jeweils größeren und kleineren Umlenkrollen (66, 67) sind mittels einer Achse (75) in senkrecht verlaufenden Streben (76) des Längsrahmens (62) angeordnet und miteinander über die Zugvorrichtungen (65) und eine für alle Umlenkrollen (66, 67) gemeinsame Kraftwelle (72) synchron gekuppelt. Dasselbe gilt auch für alle beweglichen Teile der gesamten Windkraftanlage.

Das außen am Längsrahmen (62) der Kraftwelle (72) befestigte Ausgleichsschwungrad (74) gleicht die Druckunterschiede aus, die beim gleichzeitigen Absenken und Aufrichten der Windplanenfläche (68) entstehen.

Die Windplanen (68) sind mit ihrem Außenrahmen (77) und deren beidseitigen Zugzapfen (70) mit den Zugvorrichtungen (65) verbunden. Dabei sind über die Windplanenfläche (68) verteilt Segmentrahmen (80) mit einem bestimmten Winkel zur Windplanenfläche (68) an-geordnet, an denen je drei Segmentflächen (80) befestigt sind, die unter sich rückwärts gestaffelt sind und eine Segmentgruppe bilden. Durch die Rückwärtsstaffelung der einzelnen Segmentflächen (80) entstehen zwischen den nebeneinanderliegenden Segmentgruppen Kanäle (81), in denen sich die Geschwindigkeit der Luftströmung jeweils erhöht.

Durch die Ausrichtung der Kanäle (81) auf die nachfolgende Windplanenfläche (68) werden die Luftströmungen von der Vorderseite der vorgelagerten Windplanenfläche (68) durch die Kanäle (81) selbst auf die Vorderseite der nachfolgenden Windplanenfläche (68) geleitet. Besonders durch die erhöhte Geschwindigkeit der Strömungsmengen, die in den Kanälen (81) auf die jeweilig folgende Windplanenfläche (68) fließen, wird vor ihr die vorherige Strömungsmenge wieder aufgebaut, sowie im Rücken der vorgelagerten Windplanenfläche (68) der leistungshemmende Winddruck beseitigt.

Die Windplanenflächen (68) sind mittels senkrechter und waagerechter Querstreben (82) innerhalb des Außenrahmens (77) der Windplanenfläche (68) verstärkt.

Zur Verstärkung jeder Windplanenfläche (68) kann zusätzlich auf der Strömungsseite eine aus Seilen bestehende Spannvorrichtung (83) befestigt sein, die in Verbindung mit den senkrechten und waagerechten Stützstreben (82) sowie dem Außenrahmen (77) jeder Windplanenfläche (68) während der Windbeaufschlagung eine gewisse elastische Stabilität verleiht.

Alle Werkstoffe, die zur Herstellung von Windplanenflächen wie Außenrahmen (77), Querstreben (82), Segmentflächen (80) usw. benutzt werden, sollten witterungsbeständig sein.

Jede Windplanenfläche (68), die durch diese Stützstreben (82) und vordere Spannvorrichtung (83) in etwa einen teilweise starren und einen flexiblen Körper bildet, hat beidseitig in halber Höhe an ihrem Außenrahmen (77) zwei je nach außen führende Zugzapfen (70), die mit ihren äußeren Enden an den beidseitig der Windplanenfläche (68) in Umlaufschienen (94) angeordneten Zugvorrichtungen (65) angelenkt sind.

Oberhalb der Zugzapfen (70) sind in dem Abstand, der zwischen der Umlaufschiene (94) und der Führungsleiste (78) einschließlich der beidseitigen scharfen Absenkungen besteht, Führungszapfen (71) außerhalb am Außenrahmen (77) der Windplanenfläche (68) angeordnet, die auf ihren äußeren Enden Rollen (79) tragen und damit in die beidseitig angeordneten Führungsnuten (84) einfassen.

Durch die um eine halbe Windflächenhöhe erhöhte Anordnung der kleineren Umlenkrollen (67), oberhalb der vorderseitigen und rückwärtigen größeren Umlenkrollen (66) und durch die verschieden auftretenden Abstände zwischen den inneren Umlaufschienen (94) und äußeren Führungsnuten (84) im oberen und unteren Trum der Anlage stehen die beidseitig an Zugvorrichtungen (65) angelenkten Windplanenflächen (68) im oberen Trum in senkrechter und nach der kleineren rückwärtigen Umlenkrolle (67) in waagerechter Position. Unterhalb und zwischen den größeren Umlenkrollen (66) hat die Windplanenfläche (68) im unteren Trum eine waagerechte Lage, bis sie nach den größeren und kleineren Umlenkrollen (66, 67) (groß, klein) wieder im oberen Trum der Anlage in senkrechter Position steht.

Der Abstand zwischen der inneren umlaufenden Umlaufschiene (94) und der äußeren umlaufenden Führungsnute (84) im oberen Trum ist somit mitsamt den vorder-und rückseitigen Absenkungen im unteren Trum bei den unteren Tangenten der größeren Umlenkrollen (66) aufgehoben.

Die äußere Führungsnute (84) liegt hier unmittelbar unterhalb der umlaufenden inneren Umlaufschiene (94) und verläuft mit ihr parallel und waagerecht bis zu den vorderseitigen größeren Umlenkrollen (66). Um die beschriebenen Positionen zu erreichen, wird vorzugsweise eine Vorhaltefeuer (100) eingebaut, die beidseitig der Windplanenfläche (68) jeweils an einem Kettenglied befestigt wird, im weiteren Verlauf den Zugzapfen (70) umschlingt und mit ihrem nach oben führenden Arm den Seitenrahmen der Windplanenfläche (68) immer in die abfließende Windrichtung nach vorn drückt bzw. beim Umkippen oder Aufrichten der Windplanenfläche (68) in die betriebsbedingte Lage.

Die Querleitblende (40) (vergl.Fig.la) ist in allen Kanälen am rückwärtigen Ende einer jeden Bahn (A) zwischen den größeren Umlenkrollen (66) mit einer oberen Neigung in die Richtung der abfließenden Luftströmungen angeordnet.

Die Querleitblende (40) ist in jeder Bahn (A) oben an den beidseitigen senkrechten Querstreben (26) bzw. unten zwischen den Längsrahmen (25) im unteren Trum angeordnet.

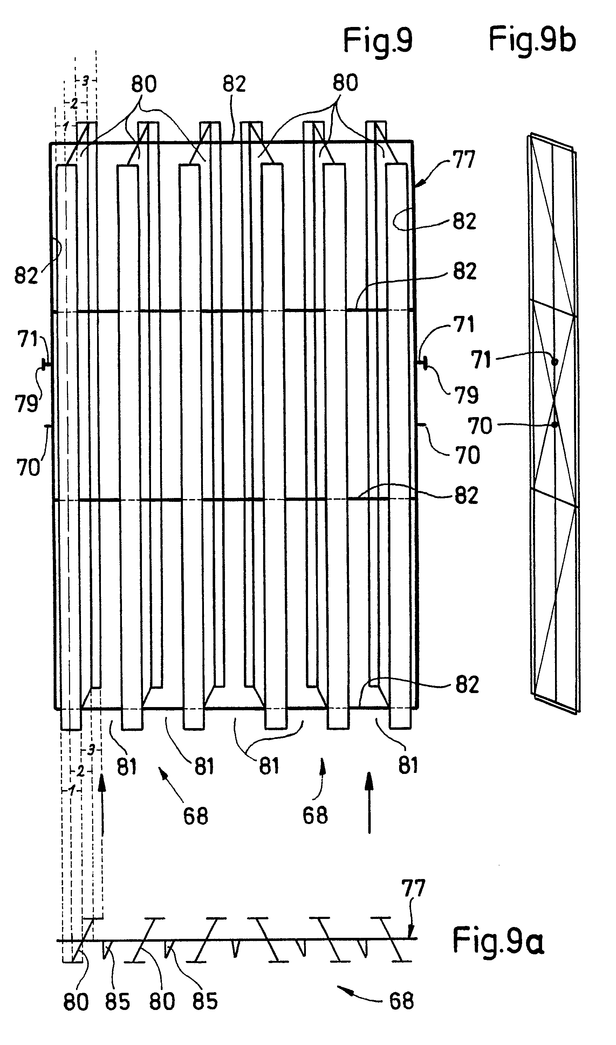

In der Mitte jeder Bahn (A) sind parallellaufend mit den Segmentrahmen (80) im Schnitt keilförmige Doppelblenden (85) (Fig.9a) angeordnet, die sich mit ihrer Spitze gegen die Strömung richten und diese auf die zu beaufschlagende Seite der Segmentrahmen (80) leiten, die aus der Windrichtung gesehen je zur Hälfte in einer Windfläche links und rechts liegen.

Darüber hinaus sind beidseitig, vorwiegend entlang der linken rückseitigen Hälfte des äußeren Längsrahmens (62) schrägstehende Leitflächen (40) (Fig.1a) angeordnet, welche die äußeren Luftströmungsmengen auf die angrenzenden Windplanenflächen (68) leiten und die auch gleichzeitig als Windfahnen die rechte vorderseitige Hälfte der Windkraftanlage der ankommenden Luftströmung entgegenhalten.

Im folgenden soll die Arbeitsweise einer Windkraftanlage beschrieben werden, die in Fig.4 ff. dargestellt ist. Beispielsweise hat die als Ausführungsbeispiel dargestellte Windkraftanlage auf drei Bahnen (A) insgesamt 24 Windplanenflächen (68). In der gezeichneten Betriebsphase werden die neun Windplanenflächen (68), die sich in senkrechter Position befinden, von den Luftströmungen auf einer Ebene geradlinig in eine Richtung (nach rückwärts) verschoben und drücken die jeweils beidseitigen Zugvorrichtungen (65) im oberen Trum, wie Ketten nach rückwärts, so daß dann über die vorder- und rückseitig gelagerten größeren Umlenkrollen (66), sowie in einem gewissen Abstand dazu, kleineren, darüberliegenden Umlenkrollen (67), die Drehbewegungen an die rückwärtigen Umlenkrollen (66, 67) und deren durchgehende Kraftwelle (72), sowie dem Generator (73) und dem Ausgleichsschwungrad (74) weitergeleitet werden. Dadurch, daß sich der Abstand zwischen der inneren umlaufenden Umlaufschiene (94) und der äußeren, ebenfalls umlaufenden Führungsnute (84) im oberen Trum der Windkraftanlage einschließlich den vorder- und rückseitigen Absenkungen im unteren Trum der Anlage völlig aufhebt, werden die jeweils betrieblich bedingten Positionen der Windplanenflächen (68) erreicht.

Während sich die neun, in senkrechter Position befindlichen Windplanenflächen (68) im oberen Trum der Anlage zu den rückwärtigen Umlenkrollen (66, 67) bewegen, sind sechs weitere je zur Hälfte am vorder- bzw. rückseitigen Ende der Anlage in der Abstieg-Umkehr- bzw. Aufrichtphase und weitere neun Windplanenflächen (68) bewegen sich in fast waagerechter Lage, also mit geringem Strömungswiderstand zu den vorderseitigen größeren und kleineren Umlenkrollen (66, 67) oder zum Einsatzpunkt zurück.

Die beidseitigen Zugzapfen (70) einer jeweiligen Windplanenfläche (68) sind mit der in der Umlaufschiene (94) befindlichen, endlos umlaufenden Zugvorrichtung (65), wie Kette, angelenkt, wobei die über den Zugzapfen (70) angeordneten Führungszapfen (71) in die beidseitig der Windplanenfläche (68) angeordneten Führungsnuten (84) einfassen.

Die ankommenden aufrechtstehenden Windplanenflächen (68) neigen sich bei den rückwärtigen kleineren Umlenkrollen (67) aus ihrer senkrechten Position um 90° in eine zunächst waagerechte Lage. Bei weiterer fortschreitender Bewegung auf der schräg nach unten abgesenkten Führung vollzieht sich bei den rückwärtigen größeren Umlenkrollen (66) eine Umkehrung von weiteren 177°, so daß sich die Windplanenflächen (68) nach vollendeter Drehung um 3° nach vorn geneigt, also mit geringem Strömungswiderstand im unteren Trum der Anlage zur vorderseitigen größeren Umlenkrolle (66) oder zum Einsatzpunkt bewegen.

Hier angekommen wird die Windplanenfläche (68) von den Zugvorrichtungen (65) zunächst in eine schräg (vorn) oben angehobene Diagonallage gezogen bzw. durch die Führungszapfen (71) geschoben und dort schon, auf dem Wege zu den vorderseitigen kleineren Umlenkrollen (67) von den Luftströmungen erfaßt.

Bei den kleineren vorderseitigen Umlenkrollen (67 ) richtet sich die Windplanenfläche (68) durch eine weitere Teildrehung wieder in die senkrechte Stellung und wird von neuem vom Wind beaufschlagt; ein neuer Umlauf beginnt.

Bei den Querleitblenden (40) wird die Luftströmung zunächst auf die untere rückwärtige Hälfte der Windplanenfläche (68) gedrückt und im weiteren Verlauf auf die nunmehr zeitweilig "obere Vorderseite",während bei weiterer Umkehrung beide Hälften fließend mit kurzer Unterbrechung den günstigen Windschatten der Querleitblende (40) durchlaufen. In diesen vier Positionsphasen wird die Umkehrung der Windplanenfläche (68) durch die Querleitblende (40) beträchtlich unterstützt. Dieser Vorgang kann noch durch die beidseitig an jeder Windplanenfläche (68) vorzugsweise angeordneten Vorhaltefedern (100) (vgl.Fig.4b) abgesichert werden. Die Windplanenflächen (68) auf der mittleren Bahn (A) haben gegenüber den angrenzenden, auf den äußeren Bahnen (A) einen Verlauf von der Hälfte des normalen Abstandes der Windplanenflächen (68), damit die Luftströmung auch vom Innern der Windkraftanlage die beiden äußeren Windplanenflächen (68) beaufschlagt.

Alle Windplanenflächen (68) bewegen sich auf den einzelnen Bahnen (A) zwischen den angrenzenden vorder-und rückseitigen Umlenkrollen (66, 67); sie drehen sich gewissermaßen um die allen gemeinsame Kraftwelle (72) und der darunterliegenden Querleitblende (40) her um und berühren die Kraftwelle (72) nicht.

Alle Windplanenflächen (68) durchlaufen die beschriebenen Abläufe kontinuierlich, wobei sie über ihre Zugzapfen (70), den untenliegenden größeren Umlenkrollen (66), sowie den darüberliegenden kleineren Umlenkrollen (67) und deren darüber umlaufenden Zugvorrichtung (65) mit einer gemeinsamen Kraftwelle (72) verbunden sind, die an einem Ende mit einem Ausgleichsschwungrad (74) und am anderen mit einem Generator (73) gekuppelt ist, der die erhaltenen Drehbewegungen in Energie umsetzt.

Die Windkraftanlage läßt sich gegen starke Winde oder Orkane leicht schützen, indem man diese vermittels des automatisch steuerbaren Stellmotors (nicht dargestellt) in einfacher Weise um 90° dreht, so daß alle Windplanenflächen (68) und die Querleitblende (40) den Luftströmungen keinen oder nur geringen seitlichen Widerstand entgegensetzen. Alle mit dem Windplanenflächen (68) zu bewegenden Teile der Windkraftanlage stehen untereinander im Eingriff mit der gemeinsamen Krafwelle (72) und verhalten sich in ihren Bewegungen synchron.

Mit einer derartigen großflächen Windkraftanlage ist es möglich, die Luftströme großflächig zu erfassen, so daß deren Bewegungs- und Stauenergie dann über den Generator (73) in elektrische Energie umgesetzt werden kann.

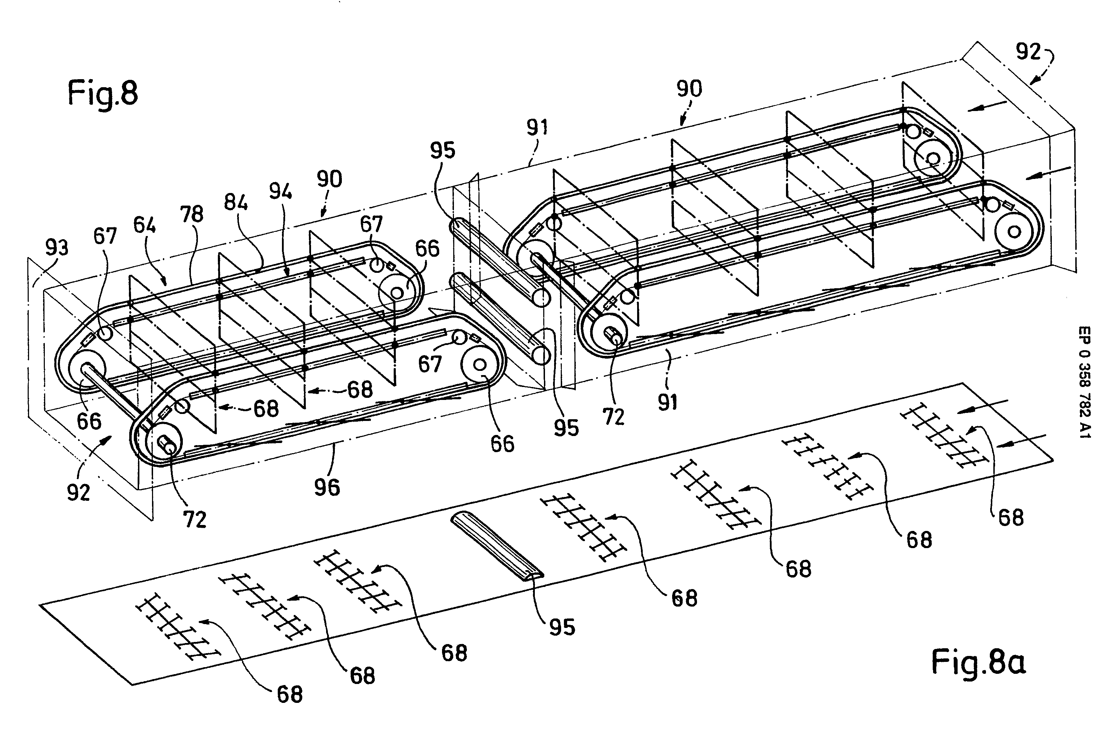

Vorzugsweise können zwei einzelne Bahnen (A) einer Windkraftanlage im kleineren Maßstab hintereinander in einem Tunnel (90) (Fig.8) installiert werden. In der Mitte zwischen zwei Bahnen (A) können Windpropeller oder Zylinderturbinen (nicht dargestellt) angeordnet sein, wobei diese Anlage von allen Seiten durch die umgebenden Tunnelwände (91) abgedeckt ist, jedoch sind die vorder- bzw. rückseitigen Öffnungen (92) offen.

In dieser Anordnung sind an dem rückwärtigen Ende des Tunnels (90) an allen Außenkanten rechtwinklig abstehende Windfahnen-Prallblenden (93) in betriebsbedingter Größe angeordnet, die einen Druckstau der Luftströmung am Ende des offenen Tunnels hervorrufen und dadurch eine Erhöhung des Druckgefälles in der rückwärtigen Öffnung der Anlage bewirken.

Beid- sowie rechtsseitig können vo einer Windturbine(95) in den Tunnelwänden (91) Öffnungen mit steuerbaren Luftklappen (nicht dargestellt) angeordnet sein, die in jeder Betriebsphase ausreichend Strömungsmengen rechtsseitig vor der Windturbine zusätzlich gewährleisten.

Durch den vorhandenen natürlichen Sog im Tunnel (90), der noch durch die in der Mitte zwischen beiden hintereinandergschalteten Bahnen (A) angeordneten Windturbine(95) erheblich sich verstärken läßt, werden die Luftströmungsmengen auf die erste rechte Windfläche jeder Bahn (A) und durch deren Kanäle gesogen bzw. von der Windturbine (95) gedrückt, strömen weiterhin gleichzeitig und gleichmäßig durch die Kanäle aller nachfolgenden Windplanenflächen (68) und treffen peripherisch jeweils in den Kanälen selbst mit erhöter Geschwindigkeit voll auf die rechtwinklig zur Strömungsrichtung hin senkrecht angeordneten Segmentrahmen (80) mit den inneren Segmentflächen, die nach rückwärts gestaffelt versetzt, beispielsweise in Dreiergruppen befestigt sind.

Vorzugsweise sind bei der Tunnelausführung die zweiten und dritten (oder mehr) Segmentflächen (80) um ihre halbe Breite hinter der jeweils vorgelagerten angeordnet, damit der Freiraum aller Kanäle in einer Windplanenfläche genau so groß ist wie die Gesamtsegmentrahmenfläche in ihnen.

Dadurch läßt sich der Vorteil erzielen, daß die anfängliche Hauptströmung einen freien ungehinderten Durchfluß durch alle Windplanenflächen (68 ) mitsamt ihren Kanälen hat, aber sich ihre Strömungsmenge nicht verringert.

Durch die fortdauernde, gradmäßig gleiche, aber immer entgegengesetzte Richtungsänderung der Kanäle in den benachbarten hintereinanderliegenden Windplanenflächen (68) beaufschlagen die peripheren Strömungsmengen immer die Segment-Gruppen, die in abfließender Strömungsrichtung gesehen in den Kanälen der linken Bahnhälfte links und in der rechten Bahnhälfte rechts liegen, weil die jeweilige Richtung der Kanäle in den Windplanenflächen (68) eine Änderung der Strömungsrichtung erzwingt und somit die Strömungsmengen zentrifugal nach außen auf die äußeren Segmentgruppen eines Kanals geworfen werden.

Die Rückseite der vorgelagerten Windplanenfläche (68) liegt auch bei dieser Tunnelausführung (90) in ihrem eigenen energiefördernden Druckschatten.

Dieser wird aufgrund der Kanäle der Kanalrichtung und der erhöhten Geschwindigkeiten der Luftströmungen in den Kanälen erzielt, wobei aber der vorherige Staudruck der nachfolgenden Windplanenfläche (68) immer wieder voll aufgebaut wird.

Bei diesem Tunnel (90) treffen die am Rande liegenden peripheren Strömungsmengen einer Luftströmung im Kanal zunächst auf die ersten Segmentflächen (80) einer Segmentgruppe und prallen seitwärts. Alsdann werden sie von der Hauptströmung erfaßt und von ihr auf die zweite Segmentfläche geworfen, die halb verdeckt hinter der ersten liegt.

Bei dieser wiederhol t sich der Vorgang, so daß auch die dritte Segmentfläche (80) kontinuierlich beaufschlagt wird und die Hauptströmung den Kanal verläßt. Dieser Vorgang findet fortlaufend in allen Kanälen statt, während gleichzeitig und gleichmäßig die Hauptströmungsmengen durch alle Windplanenflächen (68) und deren Kanäle fließen, die in der Gesamtanlage angeordnet sind.

In dieser Ausführung eines Tunnels (90) ist unter den Unterkanten aller stehenden Windplanenflächen (68) in ganzer Länge und Breite der zwei Bahnen ein Boden (96) (Fig.8) angeordnet, damit die Strömungsmengen nicht in den unteren Bereich der Anlage entweichen, in denen sich die waagerecht gelagerten Windplanenflächen zum Einsatzpunkt zurückbewegen.

Ein Leitblech linksseitig von der unteren Windturbine mit einer Steigung zum Boden (94) der vorderen Bahn ist vorzugsweise deshalb angeordnet, damit auch hier die Luftströmungen auf die Windplanenfläche (68) gedrückt werden und nicht in den unteren Teil des Tunnels (90) entweichen. Die Querleitblende (40) läßt sich in dieser Ausführung ebenfalls vorsehen.

Die Seitenwände des Tunnels (90) sollten aus funktionstechnischen Gründen einen gewissen Abstand von den Außenkanten der Windplanenflächen (68) einhalten, damit die peripheren Strömungsmengen, welche die äußeren Segmentflächen(80) an jeder Seite beaufschlagt haben, zur jeweils äußeren Wandung des Tunnels (90) entweichen und weiterhin entlang der Wandung nach rückwärts strömen können.

Ein von einer Windturbine (95) erzeugter gewisser Unterdruck am rückwärtigen Ende der rückseitigen Bahn erzwingt durch den nachfolgenden natürlichen atmosphärischen Druckausgleich einen Sog bzw. eine Luftströmung in der rechten Tunnelhälfte in Richtung auf die Windturbine, wobei deren Strömungsmengen ebenfalls alle Segmentflächen (80) aller dortigen Windplanenflächen (68) peripherisch beaufschlagen und somit vermittels der Zugvorrichtungen (65) (usw.) der Generator (73) Energie liefert. Dasselbe trifft auch auf die Windkraftanlage zu, die linksseitig vor der Windturbine in der vorderen Tunnelhälfte angeordnet ist.

Bei dieser in einem Tunnel (90) im verkleinerten Maßstab dargestellten Windkraftanlage sind die Betriebsabläufe aller beweglichen Teile der Anlage der zuerst beschriebenen normalen Windkraftanlage dieselben; es ist alles nur kompakter auf nur einer Bahn (A) in einem Tunnel angeordnet. Auch bei dieser Windkraftanlage treffen die Luftströmungen vermittels der Kanäle kontinuierlich gleichmäßig und gleichzeitig auf alle Windplanenflächen (68), die sich in senkrechter Position befinden und beaufschlagen peripherisch die Segmentflächen (80) in den Kanälen selbst. Ohne in diesen uie Menge der Luftströmungen zu verringern, werden diese massiv genutzt, während sich zur gleichen Zeit eine entsprechende Anzahl von Windplanenflächen (68) in waagerechter Lage zurück zum Einsatzpunkt bewegen.

Die Windplanenflächen (68) können denselben Quadratinhalt wie die Gesamtsegmentflächen in ihr aufweisen, aber durch deren rückwärtige Staffelung entsteht in den Windplanenflächen (68) ein 2/3 Freiraum für die Kanäle (B).

Diesen Freiraum kann man auf 100% erhöhen, indem die 2. und 3.Segmentfläche um ihre halbe Breite hinter der jeweils vorgelagerten versetzt werden. Damit ist der Freiraum aller Kanäle (B) einer Wind-planenfläche (68) genau so groß wie die Gesamtfläche in ihr. In der Mitte aller Kanäle (B) können parallellaufend mit den Segmentflächen im Schnitt keilförmige Doppelblenden angeordnet sein, die sich mit ihrer Spitze gegen die Strömung richten und diese auf die zu beaufschlagende Seite der Segmentflächen leiten. Die zu beaufschlagende Seite liegt, mit der abfließenden Windrichtung gesehen, in den Kanälen (B) links und rechts außen je zur Hälfte.

Durch die fortdauernde gradmäßig gleiche, aber immer entgegengesetzte Richtungsänderung der Kanäle (B) in den benachbarten, hintereinanderliegenden Windplanenflächen (68) beaufschlagen die peripheren Strömungsmengen immer die Segment-Dreiergruppen, die in abfließender Strömungsrichtung gesehen in den Kanälen (B) der linken Bahnhälfte links und in der rechten Bahnhälfte rechts liegen, weil die jeweilige entgegengesetzte Richtung der Kanäle (B) eine Änderung der Strömungsrichtung erzwingt und somit die Strömungsmengen zentrifugal nach außen auf die äußeren Segmentgruppen jedes Kanals (B) geworfen werden.

Da die Gesamtkanalfäche einer Windfläche um 1/3 geringer ist als deren Gesamtsegmentfläche, erhöhen sich in den Kanälen (B) die Geschwindigkeiten der Luftströmungen und gleichen deren vorherige Mengen vor der nachfolgenden Windfläche immer wieder aus. Dabei ist zu berücksichtigen, daß von der Mittellinie aus, die nach links und rechts außen gerichteten Teile der Kanal-Strömungsmengen, die jeweils links und rechts liegenden Segmentflächen beaufschlagen, während die gesamte Hauptmenge ohne nennenswerte Widerstände von einer Windplanenfläche (68) zu nachfolgenden strömt.

Unterstützt wird dieser Vorgang noch durch die einfallenden Strömungsmengen, die von der von außen vorbeiströmenden Luft vor die nachfolgenden Windplanenflächen (68) geworfen werden. Durch obige Ausführungen ist es möglich, die Abstände zwischen den einzelnen senkrechten Windplanenflächen (68) weit geringer zu halten, als wenn die Windplanenflächen (68) keine Kanäle mit ihren gestaffelten Segmentflächen hätten.

Die vorzugsweise Anordnung von erwähnten Windflächen mit eingebauten Kanälen und rückwärts gestaffelten Segmentflächen, zusammengefaßt in Dreiergruppen, bietet eine vorteilhafte Möglichkeit eine Windkraftanlage zu betreiben, die mehrere hinter- und nebeneinander angeordnete Windflächen hat und im Verhältnis zur Leistung rationell betrieben werden kann.

Bei einer weiteren bevorzugten Ausführungsform können auf drei Bahnen je drei senkrecht stehende Windflächen hintereinander gestaffelt angeordnet sein, wobei deren Zugvorrichtungen mit dem sie tragenden Längsrahmen an mehreren zentralen Masten befestigt sein können.

## Ansprüche

1. Windkraftanlage mit von Luftströmen bewegten, mit einem Generatur (31b, 73) gekuppelten Windflächen (32, 68), die hintereinander gestaffelt in Längsrahmen (25, 62) geführt und an seitlichen Zugvorrichtungen (28, 65) angelenkt sowie über endlose seitliche Umlaufschienen (27, 64) gestützt sind, wobei die Anlage auf einer drehbaren Stützplatte (16, 53) steht, gekennzeichnet durch eine derartige Anordnung und Ausbildung, daß gleichzeitig die Windflächen (32, 68) im oberen Trum der Zugvorrichtung (28, 65) etwa senkrecht stehen, im unteren Trum waagerecht gelagert sind und einige Windflächen (32, 68) an den beidseitigen Enden des Längsrahmens (25, 62) in Umkehrposition liegen.

2. Windkraftanlage nach Anspruch 1, dadurch gekennzeichnet, daß im oberen Bereich jeder Windfläche (32, 68) eine zusätzliche waagerechte Führungsstrebe (36, 82) angeordnet ist, der nach außen vorstehende Enden in eine äußere Führungsleiste (39, 78) einfassen, die mit größerem Durchmesser in gewissem Abstand von der inneren Führungsnut (27, 64) am Längsrahmen (25, 62) befestigt ist.

3. Windkraftanlage nach einem der Ansprüche 1 oder 2, dadurch gekennzeichnet, daß jede Windfläche (32, 68) eine mittlere waagerechte Haltequerstrebe (34) bzw. seitlich überstehende Zugzapfen (70) aufweist, die im dem mittleren Bereich der Windfläche (32, 68) etwa in halber Höhe (waagerechte Symmetrieachse) gelagert sind, deren Enden in seitliche Führungsnuten (27, 64) einfassen, die in dem Längsrahmen (25, 62) befestigt sind.

4. Windkraftanlage nach einem der Ansprüche 1 bis 3, dadurch gekennzeichnet, daß die Windflächen (32, 68) als Windplanen aus Gewebe, Kunststoff, Folie o.dgl. in einem Außenrahmen (35) aufgespannt sind.

5. Windkraftanlage nach einem der Ansprüche 1 bis 4, dadurch gekennzeichnet, daß oberhalb des unteren Trums der Zugvorrichtung (28, 65) eine Querleitblende (40) geneigt befestigt ist.

6. Windkraftanlage nach einem der Ansprüche 1 bis 5, dadurch gekennzeichnet, daß die Windplanenfläche (32, 68) auf ihrer Vorderseite mit einer aus Seilen o.dgl. gebildeten Spannvorrichtung (38, 83) gehalten ist.

7. Windkraftanlage nach einem der Ansprüche 1 bis 6, dadurch gekennzeichnet, daß im unteren Bereich der oberen Hälfte der Windflächen (32, 68) Führungszapfen (31) vorgesehen sind, die in einem gewissen Abstand oberhalb der Zugzapfen (70) beidseitig am seitlichen Außenrahmen (35) der Windfläche (32, 68) angeordnet sind, wobei die Fläche oberhalb der Linie zwischen den Führungszapfen (39) doppelt so groß ist bzw. größer ist als die Fläche unterhalb derselben bis zur Verbindungslinie zwischen den Zugzapfen (70).

8. Windkraftanlage nach einem der Ansprüche 1 bis 7, dadurch gekennzeichnet, daß die Zugvorrichtung (28, 65) an beiden Enden ihrer Bahn im unteren Trum über größere Umlenkrollen (66) und im gewissen Abstand von diesen im oberen Trum über näher beieinander und darüberliegende kleinere Umlenkrollen (67) verläuft.

9. Windkraftanlage nach einem der Ansprüche 1 bis 8, dadurch gekennzeichnet, daß innerhalb des Außenrahmens (35) der Windfläche (32, 68) Segmentrahmens (80) gelagert sind, an denen mehrere, mit diesen zusammengefaßte Segmentflächen gestaffelt angeordnet sind, die gruppenweise parallel zueinander angeordnet und durch seitliche angrenzende Luftkanäle getrennt sind.

10. Windkraftanlage nach einem der Ansprüche 1 bis 9, dadurch gekennzeichnet, daß benachbarte Gruppen von Segmentflächen im spitzen Winkel zueinandergestellt sind.

11. Windkraftanlage nach einem der Ansprüche 1 bis 10, dadurch gekennzeichnet, daß zwei separate Windkraftanlagen mit Segmentgruppen hintereinander mit einer zwischen ihnen angeordneten Turbine (93) in einem vorder- und rückseitig offenen, aber sonst geschlossenen Tunnel (90) eingebaut sind.

Fig.1

EP 0 358 782 A1

Fig. 1a

Fig. 2

Fig.3

Fig.4

Fig.4a

Fig.4b

Fig.5

Fig.6

Fig.7

Fig.7a

Fig.7b

Fig.8

Fig.8a

Fig.9    Fig.9b

Fig.9a

Fig.10

EP 0 358 782 A1

Europäisches
Patentamt

EUROPÄISCHER RECHERCHENBERICHT

Nummer der Anmeldung

EP 88 11 4786

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A- 15 592 (HOWE)(A.D. 1915)<br>* Seite 1, Zeile 21 - Seite 2, Zeile 32 * | 1 | F 03 D 5/02 |
| A | | 9 | |
| Y | FR-A-2 551 141 (VIGLIERCHIO)<br>* Seite 3, Zeile 5 - Seite 5, Zeile 11 * | 1 | |
| A | FR-A-2 539 460 (QUENNOX)<br>* Seite 1, Zeile 27 - Seite 2, Zeile 18 * | 2,4,7 | |
| A | GB-A- 859 007 (MATTHEWMAN)<br>* Seite 2, Zeile 1 - Seite 3, Zeile 5 * | 1,3 | |
| A | DE-A-3 304 825 (MÖBIUS)<br>* Seite 10, Zeilen 1-19 * | 1,11 | |

RECHERCHIERTE
SACHGEBIETE (Int. Cl.4)

F 03 D

**Der vorliegende Recherchenbericht wurde für alle Patentansprüche erstellt**

| Recherchenort | Abschlußdatum der Recherche | Prüfer |
|---|---|---|
| DEN HAAG | 10-03-1989 | DE WINTER P.E.F. |